# EUROPEAN PATENT APPLICATION

(11) **EP 4 029 924 A1**
(43) Date of publication of application: **20.07.2022**
(21) Application number: 21191576.4
(22) Date of filing: 17.08.2021
(51) Int. Cl.: C10G 9/36, C01B 3/24

(54) **PYROLYTIC PROCESS FOR THERMAL ENERGY TO CHEMICAL PROCESS**

(71) Applicant: Shell Internationale Research Maatschappij B.V., 2596 HR The Hague (NL)
(72) Inventor: The designation of the inventor has not yet been filed
(74) Representative: Shell Legal Services IP

(57) **Abstract**

The present invention relates to a process for integrating pyrolysis and gas or liquid cracking comprising:
a. supplying a hydrocarbon feed to a pyrolysis unit;
b. pyrolyzing the hydrocarbon feed thereby generating a first product stream comprising hydrogen and unreacted hydrocarbons;
c. using the first product stream as a fuel for at least one cracker furnace included in a cracker unit;
d. collecting a second product stream comprising hydrogen and hydrocarbons from the cracker unit; and
e. supplying the second product stream to the pyrolysis unit.

## Description

### Field of Invention

This invention relates to an integrated cracker and reactor system and related processes for carrying out chemical reactions, the system comprising at least one pyrolysis reactor and at least one hydrocarbon cracker unit. More specifically, the invention concerns methane pyrolysis integrated with hydrocarbon cracking.

### Background of the invention

Ethylene is a commonly used organic compound in the chemical industry and a building block of numerous products. Ethylene is produced by thermally decomposing either gaseousbased or liquid-based hydrocarbons feedstocks at high temperature (typically greater than 800°C) in units known as crackers. The decomposition process (e.g. cracking) does not release any CO₂ molecules. The cracking produces also a stream of secondary hydrocarbon products, including methane and hydrogen, which may be used as fuel.

The primary emissions associated with the production of ethylene come from the production of the heat needed for the endothermic cracking. In conventional cracking units, heat is typically produced by combusting hydrocarbons in furnaces. A secondary stream of hydrocarbon coming from the cracking is often used as fuel for the furnace itself. To reduce carbon dioxide emissions from the production of ethylene, new technologies solutions are needed to provide heat to the cracking process.

The use of electric furnaces is an alternative to traditional combustion furnaces to reduce ethylene carbon footprint, when using electricity with a lower greenhouse gas intensity (e.g. electricity sourced from solar, wind, etc.). Electrification of the cracker has not been deployed at scale yet and technical solutions (e.g. materials of construction) are still under development. Utilization of secondary by-products from ethylene production remains an unsolved issue related to the deployment of the electric furnace technology. By products from the cracking cannot be used as fuel in the furnace anymore. Conventional uses of the byproducts, however, as a fuel for other applications or industrial processes will still release carbon dioxide, defeating therefore the original decarbonization purpose of the furnace's electrification.

Combustion of hydrogen in the cracker furnaces is a possible strategy to reduce CO₂ emissions from heat generation. Water is the only product from hydrogen combustion and modern furnace could be retrofitted to burn hydrogen at high concentration. Hydrogen should be produced with a lower carbon intensity technology, such as Steam Methane Reforming with Carbon Capture and sequestration (SMR+CCS) or water electrolysis powered by renewable energy. A similar solution would allow minimizing the overall disruption to the existing processes. It will not solve, however, how to utilize hydrocarbons by-products without further CO₂ emissions. The byproducts could be simply sold on the market as a fuel. In general, given the fungible nature of the molecules, a full life cycle assessment would be challenging since tracking the final utilization of each molecule would extremely complex, if not unfeasible.

To achieve the goal of decarbonization in next generation cracker units, new system integrations are required to utilize the cracker by-products with lower carbon intensity.

### Summary of the invention

It has been found here a novel process to reduce CO₂ emissions from crackers for ethylene production, while ensuring the utilization of by-products without further CO₂ emissions and ensuring a full trackability of each molecule for carbon intensity assessment. In this process, the natural gas pyrolysis unit produce converts a mix of natural gas and other hydrocarbons into hydrogen and solid carbon. The hydrogen is used to produces heat in the cracker's furnace. The by-products from the gas or liquid cracking are blended with natural gas and used as a feedstock for the pyrolysis unit to produce hydrogen. The combination of pyrolysis unit + cracker produce ethylene without direct CO₂ emissions and allows a full utilization of by products without CO₂ emissions.

In an embodiment, a process for integrating pyrolysis and gas or liquid cracking comprising: (a) supplying a hydrocarbon feed to a pyrolysis unit; (b) pyrolyzing the hydrocarbon feed thereby generating a first product stream comprising hydrogen and unreacted hydrocarbons; (c) using the first product stream as a fuel for at least one cracker furnace included in a cracker unit; (d) collecting a second product stream comprising hydrogen and hydrocarbons from the cracker unit; and (d) supplying the second product stream to the pyrolysis unit.

In another embodiment, a process for integrating pyrolysis and gas or liquid cracking comprising: (a) supplying a first hydrocarbon feed to a cracking unit; (b) using the first hydrocarbon feed to generate a product stream comprising hydrogen and unreacted hydrocarbons from the cracker unit; (c) supplying the product stream to a pyrolysis unit; (d) supplying a second hydrocarbon feed to the pyrolysis unit; and (e) pyrolyzing the product stream and the second hydrocarbon feed in the pyrolysis unit thereby generating a stream of hydrogen and solid carbon.

In another embodiment, a process for integrating pyrolysis and gas or liquid cracking comprising: (a) supplying electricity to provide power to a plurality of furnaces in a cracking unit; (b) generating a stream of hydrogen and hydrocarbons from the cracking unit; (c) supplying the stream of hydrogen and hydrocarbons (from the demethanizer top) to a pyrolysis unit; and (d) pyrolyzing the stream of hydrogen and hydrocarbons (from the demethanizer top) in the pyrolysis unit thereby generating a stream of hydrogen and solid carbon.

In another embodiment, a process for integrating pyrolysis and gas or liquid cracking comprising: (a) supplying electricity to power heat generation for cracker furnaces included in a cracking unit; (b) cracking a gas or liquid feed thereby generating a stream of hydrogen and hydrocarbons from the cracking unit; (c) generating pyrolysis oil (and hydrocarbon byproducts such as deethanizer bottoms, c3s, c4s or c5s) from the cracking unit; (d) supplying the pyrolysis oil and the stream of hydrogen and hydrocarbons to a pyrolysis unit; and (e) pyrolyzing the pyrolysis oil and the stream of hydrogen and hydrocarbons contained in the pyrolysis unit thereby generating a stream of hydrogen and solid carbon.

The features and advantages of the invention will be apparent to those skilled in the art. While numerous changes may be made by those skilled in the art, such changes are within the spirit of the invention. The features and advantages of the invention will be apparent to those skilled in the art. While numerous changes may be made by those skilled in the art, such changes are within the spirit of the invention. The features and advantages of the invention will be apparent to those skilled in the art. While numerous changes may be made by those skilled in the art, such changes are within the spirit of the invention.

### Brief Description of the drawings

A more particular description of the invention, briefly summarized above, may be had by reference to the embodiments thereof which are illustrated in the appended drawings and described herein. It is to be noted, however, that the appended drawings illustrate only some embodiments of the invention and therefore not to be considered limited of its scope for the invention may admit to other equally effective embodiments.
FIG. 1 is a process flow diagram for the disclosed furnace and separation unit.
FIG. 2 is a process flow diagram for the disclosed integrated pyrolysis and cracker unit.
FIG. 3 is a process flow diagram for the disclosed integrated pyrolysis and cracker unit utilizing an e-cracker.
FIG. 4 is a process flow diagram for the disclosed integrated pyrolysis and cracker unit utilizing an e-cracker with additional integration.

### Detailed Description of the invention

As used herein, the term "steam cracking" refers to the manufacturing process of ethylene, where ethylene is produced in vapor phase starting from a variety of gas or liquid hydrocarbon feedstock, at near ambient pressure and temperature between 800 and 880°C. Conventionally, steam crackers can use multiple feedstock such as ethane, naphtha, propane, butane, gas oil, crude oil and others. Alternatively, steam crackers can be designed to use a unique type of feedstock or to have feedstock flexibility allowing an economic optimization. The process is referred to as "steam cracking" because a dilution steam is co-fed into a reactor with a hydrocarbon feedstock thereby mitigating the formation of undesired coking in the cracking furnaces, even when steam does not react with the hydrocarbon molecules. The cracking reaction leading to the formation of ethylene occurs in reactors placed inside a furnace, with the heat of the reaction provided via either fire heaters of electric heaters. Conventional fire heaters use a mix of hydrocarbons as a fuel. Each steam cracking feedstock results in a different product yield. For lighters feedstocks (e.g., ethane, propane) majority of resulting product is ethylene, hydrogen and methane. For heavier feedstocks (e.g., Naphtha, gas oil) in addition to ethylene, hydrogen and methane other hydrocarbon products like propylene, C4's and pyrolysis gasoline are also becoming relevant.

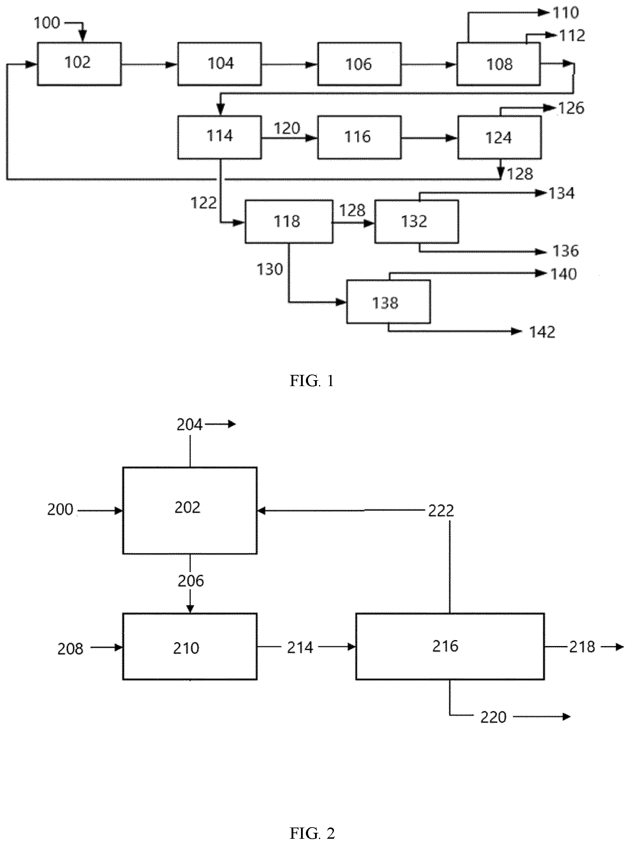

After the hydrocarbon feedstock is cracked in the furnaces (e.g., fire heated or e-cracker furnaces), the cracked gas product is cooled and compressed to be sent to a cryogenic distillation train which could be designed with three different configurations: Demethanizer first, deethanizer first and depropanizer first. Demethanizer first is the most conventional configuration and is depicted in FIG. 1.

Turning now to FIG. 1, a feedstock 100 is directed to one or more cracking furnaces and transfer line exchangers (TLE) 102. The cracking furnaces and TLEs 102 crack the feedstock 100 and rapidly quench the reactor products to avoid undesirable secondary reactions. After exiting the cracking furnaces and TLEs 102, the feedstock enters an oil and water quench 104 wherein the temperature of the reactor product is lowered, and heavier hydrocarbons are optionally separated out. After exiting the oil and water quench 104, the feedstock enters a compression and acid gas removal unit 106 wherein pressure of the reactor products is increased, and acid found in the reactor products is stripped.

Once the feedstock 100 has reacted in the cracking furnaces and TLEs 102, and the resulting reactor products have passed through the oil and water quench 104 and the compression and acid gas removal unit 106, the reactor products enter the chilling train and dementhanizer 108.

According to at least one embodiment depicted in FIG. 1, the cracked gas (reactor products) is cooled in a cryogenic box (e.g., a chilling train) and fed to the demethanizer 108. Hydrogen 110 and methane 112 are recovered at the top of the column. In some configurations, the hydrogen 110 and methane 112 streams may be sent to a PSA unit (pressure swing adsorption) (not shown) where hydrogen is separated from methane to optimally achieve a purity of >99%.

After the demethanizer 108, the bottoms are sent to a deethanizer 114 for further purification. As a result of this purification, the deethanizer 114 separates light hydrocarbons from heavy hydrocarbons resulting a C2s hydrocarbon stream 120 and C3+ hydrocarbon stream 122 (also referred to as deethanizer bottoms). C2s hydrocarbon stream 120 is fed into an acetylene hydrogenation unit 116 and the C3+ hydrocarbon stream 122 into a depropanizer 118. After the acetylene found in the C2s hydrocarbon stream 120 is hydrogenated resulting ethylene, said stream exits the acetylene hydrogenation unit 116 and enters into an ethylene fractionator 124 wherein ethylene product 126 is purified out and removed. The remaining hydrocarbon carbon feed 128 is then recycled back into the cracking furnaces and TLEs 102 further increasing total system efficiency and reducing overall CO₂ emissions.

In parallel to the ethylene production described above, the C3+ hydrocarbon stream 122 undergoes further purification in the depropanizer 118, thereby splitting the C3+ hydrocarbon stream 122 into a C3s stream 128 and a C4+ stream 130. The C3 stream 128 enters a propylene fractionator 132 which separates the C3 stream 128 into propylene 134 and propane 136, which may each be sold as products or used in this or other systems. The C4+ stream 130 enters a debutanizer 138 which separates the C4+ stream 130 into a mixed C₄ stream 140 and light gasoline 142 which may each be sold as products or used in this or other systems.

According to some embodiments, the demethanizer 108 comprises a distillation column where hydrocarbons like methane and lighter are recovered in the top of the column, and heavier hydrocarbons remained in the bottom of the column. The deethanizer may comprise a distillation column where hydrocarbons like ethane and lighter are recovered in the top of the column, and heavier hydrocarbons (also known as C3+ or deethanizer bottoms) remains in the bottom of the column. The depropanizer may comprise a distillation column where hydrocarbons like propane and lighter are recovered in the top of the column, and heavier hydrocarbons (also known as C3+) remains in the bottom of the column.

According to the embodiments disclosed herein, a pyrolysis unit is a system for decomposing methane and other hydrocarbons into solid carbon and molecular hydrogen. Some embodiments of the system may comprise a reactor chamber where the conversion of the molecules in the feed takes place. The methane coming into the reactor chamber as a feed (to be decomposed into hydrogen and solid carbon), may be mixed with hydrogen and other gaseous hydrocarbons. In some cases, liquid hydrocarbons may be used as a feedstock for hydrogen production. A fraction of methane may enter into the pyrolysis unit from the de-methanation unit of the crackers. Other hydrocarbon produced in the cracker unit may also be sent to the pyrolysis unit as a feedstock to produce hydrogen and solid carbon. Examples or solid carbon may include carbon black, graphite, graphene, coke, carbon nanotubes, amorphous carbon, and any other configurations generally known to a person of ordinary skill in the art.

Inside the pyrolysis rector, hydrocarbon molecules are decomposed into molecular hydrogen and solid carbon utilizing any available pyrolysis concepts.

In some embodiments, the pyrolysis unit may operate in a broad range of temperature and pressure. The selection of the pyrolysis technology and the specific design of the pyrolysis reactor do not affect the integration of the pyrolysis unit with the ethane cracker. The energy required to decompose methane in the pyrolysis unit could be provided via electricity or by combustion of a mix of hydrogen and natural gas. The integration schemes disclosed herein are compatible with all available pyrolysis concepts.

Turning now to FIG. 2, a natural gas or methane feedstock 200 is fed into a pyrolysis unit 202 thereby producing solid carbon 204 and a hydrogen-rich feed 206 via pyrolysis. The hydrogen-rich feed 206 may additionally include some amount of unreacted natural gas or methane. Additionally, an additional step (not depicted in FIG. 2) of purifying the hydrogen-rich feed 206 may be used after the pyrolysis has occurred to generate a hydrogen stream with reduced amounts of unreacted hydrocarbon and therefore higher proportional amounts of hydrogen in the stream. The hydrogen-rich feed 206 and an ethane or liquid hydrocarbon feed 208 are fed into a cracker furnace 210 wherein the hydrogen-rich feed 206 is used as fuel to crack the ethane or liquid hydrocarbon feed 208 thereby producing a hydrocarbon stream 214 which is subsequently fed into a separation unit 216. In some embodiments, the cracker furnace 210 is an ethylene cracker. In some embodiments, the cracker furnace 210 is configured for gas cracking or liquid cracking. The separation unit 216 separates the hydrocarbon stream 214 into product streams for ethylene 218 and byproduct hydrocarbons 220. Any remaining hydrogen and/or hydrocarbons 222 may be fed back into the pyrolysis unit thereby avoiding being combusted in other processes and releasing CO₂.

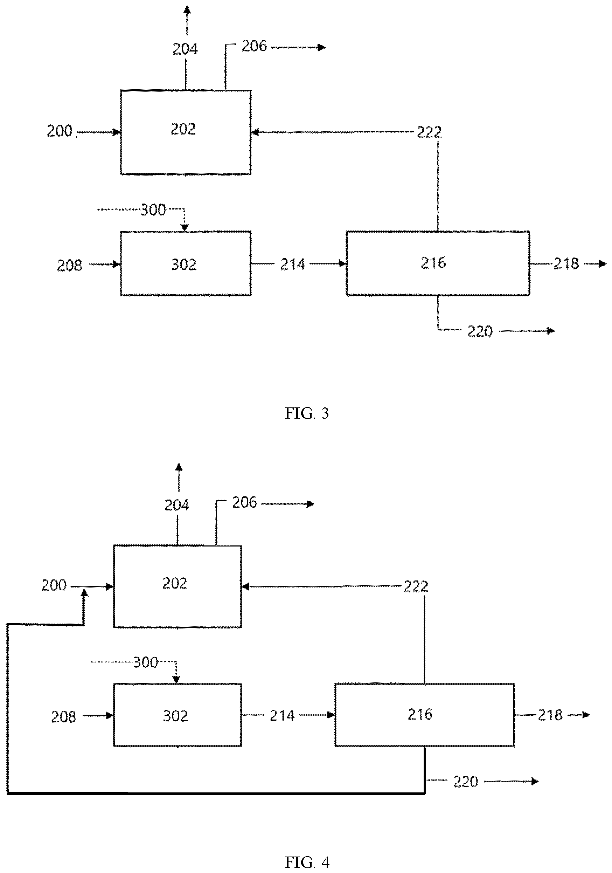

In another embodiment, depicted in FIG. 3, a natural gas or methane feedstock 200 is fed into a pyrolysis unit 202 wherein via pyrolysis solid carbon 204 and hydrogen 206 is produced. The hydrogen stream 206 may additionally include some amount of unreacted natural gas or methane. The hydrogen stream 206 produced by the pyrolysis unit 202 may be taken as a product stream, rather than being fed into the cracker furnace 210, as explained above with reference to FIG. 1. According to the present embodiment, electricity 300 may be used to power an electric cracker furnace (an e-cracker) 302 utilizing an ethane or liquid hydrocarbon feed 208 thereby producing an hydrocarbon stream 214 which is subsequently fed into a separation unit 216, similar to the embodiment described above and shown in FIG. 1. As with the previously disclosed embodiment, the separation unit 216 separates the hydrocarbon stream 214 into product streams for ethylene 218 and other byproduct hydrocarbons 220. Any remaining hydrogen and/or hydrocarbons 222 may be fed back into the pyrolysis unit thereby avoiding being combusted in other processes and releasing CO₂.

The use of an e-cracker 302 according to the embodiments disclosed herein further continues to reduce CO₂ emissions consistent with other aspects of the presently disclosed invention. When such e-cracker is used in an effort to expand electrification, the placement of the hydrocarbon by-products is still necessary. The configurations disclosed herein present integrated systems to use those by-products which would have otherwise been used in CO₂ emitting systems. Therefore, by using these by-products as fuel in other segments of the systems disclosed herein, CO₂ emissions are further mitigated.

In another embodiment, depicted in FIG. 4, an integrated cracker and reactor system is shown with the overall configuration described above with reference to FIG.3 with the additional added integration that the hydrocarbon byproducts (e.g., deethanizer bottoms, c3s, c4s or c5s) 220 produced by the e-cracker 302 may be fed back into the pyrolysis unit 202 with the natural gas or methane feedstock 200 thereby increasing overall hydrogen production and system integration.

According to some embodiments, the hydrogen-rich feed 206 from the pyrolysis unit could be sent to a gas separation unit to produce a stream of purified concentrated hydrogen prior to its use in the cracker furnace 210.

According to at least one embodiment, after gas purification, the hydrogen produced from the pyrolysis unit may be used as a fuel in the cracker furnace and react with oxygen in a combustion reaction to generate a flame and the necessary heat for the cracking process. In some embodiments, the hydrogen may also mixed with methane and other gaseous hydrocarbons, based on the desired CO₂ emission targets of the entire process and the fuel mix allowed by the furnaces design. Certain furnaces design may allow up to 100% of hydrogen as a fuel, or alternatively up to 98%, 95%, or 90% hydrogen as fuel. For furnaces requiring a mix of hydrogen and methane, the purification step could be avoided, and the stream from the pyrolysis unit of hydrogen and unreacted methane may be used in the cracker's furnaces as a fuel.

Any hydrogen produced in the pyrolysis unit and not utilized in the cracker's furnace for heat generation may be used for other applications, including (but not limited) to chemicals production, hydrocarbon refinery, iron ore reduction

The pyrolysis unit may be used to convert the methane generated in an electric cracker into hydrogen and solid carbon. In this configuration, the hydrogen produced in the pyrolysis unit can be fully utilized for other applications, since the electric cracker does require hydrogen as a fuel. The combination of pyrolysis + electric cracker allows for a reduction of CO₂ emission from ethylene production, without the need to find an outlet for the methane produced during the cracking of ethane or other liquid hydrocarbons (i.e. naphtha)

As explained above, the proposed design solutions disclosed herein reduce overall CO₂ emissions over conventional systems. Table 1 below depicts the direct CO₂ emissions of a conventional gas cracker if the byproducts of the cracker configurations disclosed herein (left most column) are used for heating value: 1.

**Table 1. Direct CO₂ emissions if the hydrocarbon byproducts are used as heating fuel, for a unit producing 1500 KTA of ethylene**

| Hydrocarbons byproducts | **CO₂ from combustion** *KTA* | **CO₂ per kg of produced ethylene** *kgCO2*/*kgC2H4* |
|---|---|---|
| **Methane** | 304 | 0.20 |
| **Deethanizer bottoms** | 281 | 0.19 |
| **C5s or oil layer** | 151 | 0.10 |

As shown in Table 2 below, the systems disclosed herein significantly mitigate CO2 emissions by making hydrogen and solid carbon as products when the byproducts of the cracker configurations disclosed herein (left most column) are fed back into a pyrolysis unit and undergo further pyrolysis:

**Table 2. Hydrogen and solid carbon from pyrolysis of hydrocarbons by-product from a unit producing 1500 KTA of ethylene**

| Hydrocarbons byproducts | **Hydrogen** *KTA* | **Solid Carbon** *KTA* |
|---|---|---|
| **Methane** | 27.6 | 82.9 |
| **Deethanizer bottoms** | 4.1 | 21.5 |
| **C5s or oil layer** | 1.7 | 8.3 |

Similar to Table 1 above, Table below depicts the direct CO₂ emissions of a conventional liquid cracker if the byproducts of the cracker configurations disclosed herein (left most column) is used for heating value: 2.

**Table 3. Direct CO₂ emissions if the hydrocarbon byproducts are used as heating fuel, for a unit producing 1000 KTA of ethylene and 550 KTA of propylene**

| Hydrocarbons byproducts | **CO₂ from combustion** *KTA* | **CO₂ per kg of produced ethylene and propylene** *kgCO2*/*kgProduct* |
|---|---|---|
| **Methane** | 1711 | 1.10 |
| **Ethane** | 745 | 0.48 |
| **C3s+C4s** | 274 | 0.18 |
| **C5s** | 376 | 0.24 |

As shown in Table 3 above, the systems disclosed herein significantly mitigate CO₂ emissions by making hydrogen and solid carbon as products when the byproducts of the cracker configurations disclosed herein (left most column) are fed back into a pyrolysis unit and undergo further pyrolysis:

**Table 4. Hydrogen and solid carbon from pyrolysis of hydrocarbons by-product from a unit producing 1000 KTA of ethylene and 550 KTA of propylene**

| Hydrocarbons byproducts | **H₂** *KTA* | **Solid Carbon** *KTA* |
|---|---|---|
| **Methane** | 155.5 | 466.5 |
| **Ethane** | 25.4 | 101.6 |
| **C3s+C4s** | 4.5 | 24.3 |
| **C5s** | 4.1 | 20.5 |

## Claims

1. A process for integrating pyrolysis and gas or liquid cracking comprising:
a. supplying a hydrocarbon feed to a pyrolysis unit;
b. pyrolyzing the hydrocarbon feed thereby generating a first product stream comprising hydrogen and unreacted hydrocarbons;
c. using the first product stream as a fuel for at least one cracker furnace included in a cracker unit;
d. collecting a second product stream comprising hydrogen and hydrocarbons from the cracker unit; and
e. supplying the second product stream to the pyrolysis unit.

2. The process according to claim 1 wherein the cracker furnaces are gas crackers.

3. The process according to claim 1 wherein the second product stream is collected from a cold train demethanizer section of the cracker unit.

4. The process according to claim 1 additionally comprising
a. collecting a second hydrocarbon stream comprising C₃ and C₄ hydrocarbons from the cracker unit; and
b. supplying the second hydrocarbon stream to the pyrolysis unit.

5. The process according to claim 4 wherein the second hydrocarbon stream is collected from a deethanizer section of the cracker unit.

6. A process for integrating pyrolysis and gas or liquid cracking comprising:
a. Supplying a first hydrocarbon feed to a cracking unit;
b. Using the first hydrocarbon feed to generate a product stream comprising hydrogen and unreacted hydrocarbons from the cracker unit;
c. Supplying the product stream to a pyrolysis unit;
d. Supplying a second hydrocarbon feed to the pyrolysis unit; and
e. Pyrolyzing the product stream and the second hydrocarbon feed in the pyrolysis unit thereby generating a stream of hydrogen and solid carbon.

7. A process for integrating pyrolysis and gas or liquid cracking comprising:
a. Supplying electricity to provide power to a plurality of furnaces in a cracking unit;
b. Generating a stream of hydrogen and hydrocarbons from the cracking unit;
c. Supplying the stream of hydrogen and hydrocarbons to a pyrolysis unit; and
d. Pyrolyzing the stream of hydrogen and hydrocarbons in the pyrolysis unit thereby generating a stream of hydrogen and solid carbon.

8. The process according to claim 7 wherein the stream of hydrogen and hydrocarbons is blended with a supplemental hydrocarbon stream prior to supplying the stream of hydrogen and hydrocarbons to the pyrolysis unit.

9. A process for integrating pyrolysis and gas or liquid cracking comprising:
a. Supplying electricity to power heat generation for cracker furnaces included in a cracking unit;
b. Cracking a gas or liquid feed thereby generating a stream of hydrogen and hydrocarbons from the cracking unit;
c. Generating pyrolysis oil from the cracking unit;
d. Supplying the pyrolysis oil and the stream of hydrogen and hydrocarbons to a pyrolysis unit; and
e. Pyrolyzing the pyrolysis oil and the stream of hydrogen and hydrocarbons contained in the pyrolysis unit thereby generating a stream of hydrogen and solid carbon.
